# EUROPÄISCHE PATENTSCHRIFT

(11) **EP 2 197 788 B1**
(45) Veröffentlichungstag und Bekanntmachung des Hinweises auf die Patenterteilung: **15.01.2014**
(21) Anmeldenummer: 08838323.7
(22) Anmeldetag: 07.10.2008
(51) Int. Cl.: C01B 33/107

(54) **VERFAHREN ZUR HERSTELLUNG VON HOCHREINEM HEXACHLORDISILAN**
PROCESS FOR PREPARING HIGH-PURITY HEXACHLORODISILANE
PROCÉDÉ DE PRODUCTION D'HEXACHLORODISILANE DE HAUTE PURETÉ

(30) Priorität: 09.10.2007 DE 102007000841
(43) Veröffentlichungstag der Anmeldung: 23.06.2010
(73) Patentinhaber: Wacker Chemie AG, 81737 München (DE)
(72) Erfinder: KNIES, Wolfgang, 84489 Burghausen (DE); BÖGERSHAUSEN, Karin, 84489 Burghausen (DE); EIBLMEIER, Hans, 84489 Burghausen (DE)
(74) Vertreter: Budczinski, Angelika
(86) Internationale Anmeldenummer: PCT/EP2008/063363
(87) Internationale Veröffentlichungsnummer: WO 2009/047238

(56) Entgegenhaltungen:
- EP-A- 1 264 798
- GB-A- 2 079 736
- JP-A- 2006 176 357
- DATABASE WPI Week 198703 Thomson Scientific, London, GB; AN 1987-017719 XP002510996 & JP 61 275125 A (MITSUI TOATSU CHEM INC) 5. Dezember 1986 (1986-12-05)

## Beschreibung

Die Erfindung betrifft ein Verfahren zur Herstellung von hochreinem Hexachlordisilan durch Destillation.

In EP-A 1 264 798 wird die Herstellung von Hexachlordisilan aus den Abgasen der Abscheidung polykristallinen Siliciums durch destillative Abtrennung von den anderen Chlorsilanen und Prozessgasen beschrieben. GB 923 784 beschreibt die Herstellung von Hexachlordisilan durch thermisches Cracken von Trichlorsilan in einem Temperaturbereich von 200 bis 600°C, wobei die Reaktion unter einem Schutzgas oder unter Wasserstoffgas durchgeführt werden muss. DE 11 42 848 beschreibt ebenfalls die Gewinnung von hochreinem Hexachlordisilan durch Erhitzen von Trichlorsilan auf 200 bis 1000°C in einem Elektronenbrenner. Auch diese Reaktion wird unter Schutzgas bzw. Verwendung von Wasserstoff als Transportgas durchgeführt. In WO-A 06109427 wird die Abtrennung von Silanol aus Hexachlordisilan durch Behandlung mit Aktivkohle gefolgt von einer Destillation beschrieben. In Ultrareine Stoffe Nr. 4 (1994) beschreiben V.A. Schaligin u.a., dass bei einer Destillation von Hexachlordisilan der Siedepunkt des Produktes nicht überschritten werden soll, da ansonsten eine Zersetzung des Hexachlordisilans erfolgen würde.

Gegenstand der Erfindung ist ein Verfahren zur Herstellung von Hexachlordisilan durch Destillation eines Hexachlordisilan enthaltenden Gemischs, dadurch gekennzeichnet, dass bei der Destillation Wasser in Mengen von maximal 10 ppbw (Gewichtsteile pro Milliarde = parts per billion by weight) anwesend ist und es sich bei den Hexachlordisilan enthaltenden Gemischen um solche handelt, die neben Hexachlordisilan Tetrachlorsilan und gegebenenfalls noch Spuren an Trichlorsilan enthalten können, wobei die Chlorsilangemische keine Silanole oder Silanole nur in Mengen bis < 1 ppbw enthalten.

Bei dem erfindungsgemäß eingesetzten Hexachlordisilan enthaltenden Gemisch handelt es sich bevorzugt um Chlorsilangemische, die aus der Reaktion von HCl mit Calciumsilicid, aus der Reaktion von Chlor mit Silizium oder aus den Prozessabgasen der Abscheidung von polykristallinem Silizium erhalten werden, besonders bevorzugt um Prozessabgase, die bei der Abscheidung von polykristallinem Silizium erhalten werden (nachfolgend Prozessgas genannt). Diese erfindungsgemäß eingesetzten Chlorsilangemische können vor oder während der Aufreinigung mit Chlor behandelt worden sein, um Hydrogenchlorsilane zu Chlorsilanen umzuwandeln, da insbesondere Hydrogenchlorsilane mit höherem Wasserstoffgehalt selbstentzündlich sein können.

Die erfindungsgemäß eingesetzten Chlorsilangemische können auch noch mit weiteren Stoffen, wie z.B. Aktivkohle oder - wenn überhaupt - bevorzugt pyrolytisch oder durch Fällungsprozess hergestellte Kieselsäure, versetzt werden.

Die erfindungsgemäß eingesetzten Chlorsilangemische enthalten keine Silanole oder Silanole nur in Mengen bis < 1 ppbw. Die Bildung von Silanolen, z.B. aus der Reaktion von Wasser mit Chlorsilanen, ist unerwünscht, da diese zu Disiloxanen kondensieren können. Die Entstehung von Hexachlordisiloxan ist insbesondere nachteilig, da dessen Siedepunkt sich nur wenig von dem des Hexachlordisilans unterscheidet und somit schwer abtrennbar ist.

Das im erfindungsgemäßen Verfahren eingesetzte Chlorsilangemisch ist bevorzugt flüssig. Falls es sich bei dem Chlorsilangemisch um Prozessgase handelt, wird dieses vor der Destillation bevorzugt kondensiert, z.B. durch einfaches Abkühlen, bevorzugt auf < 20°C, besonders bevorzugt auf 10 bis 20°C.

Die erfindungsgemäße Destillation kann entweder unter Normaldurch, Überdruck oder reduziertem Druck erfolgen. Eine Entscheidung hierzu wird im Wesentlichen von der Zusammensetzung des Chlorsilangemischs beeinflusst. Sind z.B. Verunreinigungen, wie etwa Titanchloride oder Hexachlordisiloxan, nicht gegenwärtig, kann unter reduziertem Druck destilliert werden.

Bevorzugt wird jedoch die erfindungsgemäße Destillation unter Normaldruck oder einem minimalen Überdruck durchgeführt. Unterdruck hingegen ist nicht bevorzugt, da durch gegebenenfalls vorhandene Undichtigkeiten in der zur Durchführung des erfindungsgemäßen Verfahrens verwendeten Apparatur bei Unterdruck Luft mit einem gewissen Feuchtigkeitsanteil aus der Umgebung mit dem Chlorsilangemisch in Berührung kommt.

Besonders bevorzugt wird die erfindungsgemäße Destillation bei dem Druck der umgebenden Atmosphäre, also von 900 bis 1100 hPa, insbesondere von 980 bis 1020 hPa, durchgeführt.

Die erfindungsgemäße Destillation kann in Anwesenheit oder Abwesenheit von Schutzgas, wie Stickstoff, Helium oder Argon, durchgeführt werden; sie kann aber auch an Luft durchgeführt werden, solange der Feuchtigkeitsgehalt maximal 10 ppbw beträgt. Bevorzugt wird schon aus Kostengründen die Destillation in Anwesenheit von Stickstoff durchgeführt.

Bei der erfindungsgemäßen Destillation ist Wasser in Mengen von bevorzugt maximal 5 ppbw anwesend, besonders bevorzugt maximal 1 ppbw, insbesondere ist bei der Destillation kein Wasser anwesend. Dies wird z.B. erreicht durch Trocknung des zugeleiteten Chlorsilangemischs, wobei die Trocknung nach beliebigen und bisher bekannten Verfahren zur Trocknung von Gasen und Flüssigkeiten erfolgen kann. Durch ein während der Destillation andauernd zugeführtes Schutzgas würde unter technischen Bedingungen immer wieder neu Feuchtigkeit hinzugeführt. Um dies zu verhindern, kann man die Anlage mit einem Druckausgleichsventil verschließen, das einen entstehenden Überdruck nach außen ablässt, aber keinen Druckausgleich von außen nach innen zulässt. Der beim Aufheizen der Anlage entstehende Überdruck entweicht, bis die Anlage sich im Gleichgewicht befindet. Beim Abkühlen der Anlage entsteht wieder ein Unterdruck, der ausgeglichen werden muss. Das Druckausgleichsventil kann entweder ein mechanisches Ventil sein, das bei Überdruck öffnet und bei Unterdruck mit Schutzgas belüftet, oder einfach ein mit einer Sperrflüssigkeit befüllter Blasenzähler. Letzterer lässt aber beim Abkühlen keinen Ausgleich des Unterdruckes zu.

Die erfindungsgemäße Destillation kann nach beliebigen und bisher bekannten Methoden erfolgen, wie z.B. durch Vakuumdestillation oder Destillation bei Normaldruck. Bevorzugt ist ein Druck im Bereich von 300 bis 600 mbar, wobei Drücke im Bereich von < 10 mbar zu vermeiden sind, da Hexachlordisilan dann bereits bei Raumtemperatur flüchtig ist.

Unter dem Begriff Vakuum sollen im Rahmen der vorliegenden Erfindung alle dem Fachmann sinngemäß bekannten Arten von Vakuum verstanden werden, wie z.B. Grob-Vakuum und Fein-Vakuum.

Bei dem erfindungsgemäßen Verfahren beträgt die Kopftemperatur bevorzugt 146 bis 149°C, besonders bevorzugt 147 bis 148°C jeweils bei einem Druck der umgebenden Atmosphäre, also bevorzugt von 990 bis 1020 hPa.

Bei einer sog. Vakuumdestillation ist die Verwendung von Drehzahl gesteuerten Membranpumpen vorteilhaft, da diese das Vakuum ohne Gasballast auf einen definierten Stand halten.

Zur fraktionierten Destillation können unterschiedliche Bauarten von Kolonnen verwendet werden, z.B. Füllkörperkolonnen, Sieb- oder Glockenbodenkolonnen.

Die erfindungsgemäße Destillation kann diskontinuierlich oder kontinuierlich durchgeführt werden.

Bei dem erfindungsgemäßen Verfahren wird der erhaltene Dampf zum Destillat abgekühlt, bevorzugt auf kleiner 40°C, besonders bevorzugt auf kleiner 30°C.

Nach dem erfindungsgemäßen Verfahren wird Hexachlordisilan in einer Reinheit von über 99,5% erhalten.

Das erfindungsgemäße Verfahren hat den Vorteil, dass Hexachlordisilan in hoher Reinheit erhalten wird.

Das erfindungsgemäße Verfahren hat den Vorteil, dass Hexachlordisilan mit keinem oder einem nur sehr geringen Gehalt an Hexachlordisiloxan hergestellt werden kann.

Das erfindungsgemäße Verfahren hat den Vorteil, dass das erhaltene Hexachlordisilan sich durch eine hohe Temperaturbeständigkeit auszeichnet.

Das erfindungsgemäße Verfahren hat den weiteren Vorteil, dass sich in der Anlage keine Beläge bilden können, die sich bei einer Berührung schlagartig unter Flammenbildung zersetzen.

In den nachstehend beschriebenen Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23°C sowie bei einer relativen Luftfeuchtigkeit von etwa 50 % durchgeführt.

In den folgenden Beispielen wurde der Gehalt an Verunreinigungen gaschromatographisch bestimmt.

Im Folgenden soll unter Bezeichnung "getrockneter Stickstoff" getrockneter Stickstoff mit < 10 ppbw Feuchte, der z.B. über eine Trockenpatrone des Typs OMI 4 der Fa. Supelco, Bellefonte-USA getrocknet wurde, verstanden werden.

### Beispiel 1

### Destillation unter Normaldruck

Es wurde ein Gemisch aus 68% Tetrachlorsilan und 32% Hexachlordisilan verwendet. Dieses wurde in einen 1L Glaskolben mit Rührer und Thermometer gegeben. Auf dem Kolben war eine 100 cm Füllkörperkolonne mit Kolonnenkopf. Die Vorlage hatte eine Temperatur von < 20°C. Es wurde nun folgendes Gas verwendet: getrockneter Stickstoff. Der Gasstrom wurde zu 10L/Std. über ein Feinventil eingestellt.

Zur Destillation wurde die Sumpftemperatur sukzessive auf bis zu 155°C heraufgesetzt. Nach Abnahme eines Vorlaufes von Tetrachlorsilan wurde im Hauptlauf bei einer Kopftemperatur von 147 bis 148°C Hexachlordisilan abgenommen.

Nach Abkühlen auf Raumtemperatur wurden von den verschiedenen Hauptläufen Analysen mittels Gaschromatographie durchgeführt. Die Ergebnisse finden sich in Tabelle 1.

**Tabelle 1**

| **Beispiel** | **1** | **V1** | **V2** |
|---|---|---|---|
| Hexachlordisilan | 99,297% | 99,596% | 99,671% |
| Hexachlordisiloxan | 0,023% | 0,013% | 0,006% |

Die Gehalte an Hexachlordisiloxan korrespondieren mit dem Feuchtegehalt des Gases. Die Zusammensetzungen enthalten darüber hinaus Tetrachlorsilan, Trichlorsilan und 2 bis 3 unbekannte Substanzen.

### Vergleichsbeispiel 1

Die in Beispiel 1 beschriebene Verfahrensweise wird wiederholt mit der Abänderung, dass als Gas
V1: technischer Stickstoff mit ca. 50 ppm Feuchte
eingesetzt wird.

Nach Abkühlen auf Raumtemperatur wurden von den verschiedenen Hauptläufen Analysen mittels Gaschromatographie durchgeführt. Die Ergebnisse finden sich in Tabelle 1.

### Vergleichsbeispiel 2

Die in Beispiel 1 beschriebene Verfahrensweise wird wiederholt mit der Abänderung, dass als Gas
V2: über Trockengel getrockneter Stickstoff mit ca. 0,5 ppm Feuchte
eingesetzt wird.

Nach Abkühlen auf Raumtemperatur wurden von den verschiedenen Hauptläufen Analysen mittels Gaschromatographie durchgeführt. Die Ergebnisse finden sich in Tabelle 1.

### Beispiel 2

### Destillation unter Vakuum

Es wurde ein Gemisch aus 68% Tetrachlorsilan und 32% Hexachlordisilan verwendet. Dieses wurde in einen 1L Glaskolben mit Rührer und Thermometer gegeben. Auf dem Kolben war eine 100 cm Füllkörperkolonne mit Kolonnenkopf.

Die Destillation wurde bei einem Druck von 200 mbar, der über eine Drehzahl gesteuerte Membranpumpe erzeugt wurde, durchgeführt. Die Anlage war vor dem Versuch mit getrocknetem Stickstoff gespült worden.

Bei dem Druck von 200 mbar wurde bei einer Kopftemperatur von 93°C (Sumpftemperatur 94 bis 95°C) im Hauptlauf Hexachlordisilan entnommen. Nach Beendigung des Versuchs wurde das Vakuum mit getrocknetem Stickstoff gebrochen.

Die Ergebnisse finden sich in Tabelle 2.

Die Temperaturbeständigkeit des so erhaltenen Hexachlordisilans wurde mittels Dynamischer Differenz-Kalorimetrie in einem geschlossenen System gemäß TRAS 410 (Technische Richtlinie Anlagen Sicherheit) untersucht. Die Bestimmung erfolgte sowohl unter Stickstoff (Taupunkt -80°C) als auch an Luft (50% Luftfeuchte). In beiden Gasatmosphären konnte keinerlei Exothermie bis zu einer Temperatur von 400°C festgestellt werden.

**Tabelle 2**

| **Beispiel** | **ohne Gasballast (2)** | **Mit Gasballast (V3)** |
|---|---|---|
| Hexachlordisilan | 99,519% | 99,359% |
| Hexachlordisiloxan | 0,055% | 0,275% |

### Vergleichsbeispiel 3 (V3)

Die in Beispiel 2 beschriebene Verfahrensweise wird wiederholt mit der Abänderung, dass eine ungeregelte Membranpumpe verwendet und der Druck durch Zugabe von technischem Stickstoff über ein Ventil auf 200 mbar eingestellt wurde.

Bei dem Druck von 200 mbar wurde bei einer Kopftemperatur von 93°C (Sumpftemperatur 94 bis 95°C) im Hauptlauf Hexachlordisilan entnommen. Nach Beendigung des Versuchs wurde das Vakuum mit technischem Stickstoff gebrochen.

Die Ergebnisse finden sich in Tabelle 2.

### Beispiel 3

In einen Dreihalskolben mit Rührer und Thermometer, der mit einer ca. 100 cm langen Füllkörperkolonne verbunden war, wurden wiederum 2400 g des in Beispiel 1 beschriebenen Gemisches von Tetrachlorsilan und Hexachlordisilan gegeben. Die Vorlage wurde mit Kühlsole (ca. -20°C) gekühlt. Über eine Membranpumpe wurde ein Vakuum erzeugt.

### Beginn der Destillation:

| | | |
|---|---|---|
| Temperatur | Sumpf | 22°C |
| | Kopf | 18°C |
| Druck | | 225 mbar |

Unter diesen Bedingungen wurden am Kopf ca. 850 g Tetrachlorsilan als Kondensat abgenommen. Anschließend wurde die Temperatur leicht gesteigert und das Vakuum verstärkt:

| | | |
|---|---|---|
| Temperatur | Sumpf | 26°C |
| | Kopf | 16°C |
| Druck | | 200 mbar |

Unter diesen Bedingungen wurden weitere 450 g Tetrachlorsilan abgenommen.

Anschließend wurde die Temperatur im Sumpf allmählich auf 70°C erhöht, das Vakuum allmählich auf 100 mbar abgesenkt. Nachdem diese Werte erreicht waren, konnten insgesamt nochmals ca. 500 g Tetrachlorsilan abgenommen werden. Nachdem unter diesen Bedingungen kein weiteres Destillat mehr erhalten werden konnte, wurde das Vakuum mit getrocknetem Stickstoff gebrochen. Nach Abkühlen von ca. 70°C auf Raumtemperatur wurde ein Vakuum von 35 mbar eingestellt und die Sumpftemperatur auf ca. 45°C gesteigert. Unter diesen Bedingungen wurde Hexachlordisilan abgenommen.

Unter diesen Bedingungen konnte Hexachlordisilan mit einer Reinheit von 99,76%, einem Gehalt an Hexachlordisiloxan von 0,013% und von Tetrachlorsilan von 0,044% erhalten werden.

### Vergleichsbeispiel 4

In einen 250 ml Schlenkkolben mit Rückflusskühler wurden ca. 100 ml Hexachlordisilan (Reinheit 99,09%) gegeben. Dieser wurde oberhalb des Rückflusskühlers mit Stickstoff technischer Qualität (ca. 50 ppm Feuchte) bespült. Das Hexachlordisilan wurde ca. 30 Stunden am Rückfluss erhitzt.

An der Glaswandung gegenüber dem Eintritt des Stickstoffs bildete sich ein weißer Belag, der beim Reiben mit einem Spatel Funken bildete. Der Belag zündete auch, nachdem das Teil in Wasser gehalten wurde.

Bei Verwendung von getrocknetem Stickstoff wurde selbst bei einer Versuchsdauer von 3 Wochen kein Belag gebildet.

Dieser Versuch zeigt, dass Feuchtigkeit zu gefährlichen Hydrolyseprodukten führen kann.

## Patentansprüche

1. Verfahren zur Herstellung von Hexachlordisilan durch Destillation eines Hexachlordisilan enthaltenden Gemischs, **dadurch gekennzeichnet, dass** bei der Destillation Wasser in Mengen von maximal 10 ppbw (Gewichtsteile pro Milliarde = parts per billion by weight) anwesend ist und es sich bei den Hexachlordisilan enthaltenden Gemischen um solche handelt, die neben Hexachlordisilan Tetrachlorsilan und gegebenenfalls noch Spuren an Trichlorsilan enthalten können, wobei die Chlorsilangemische keine Silanole oder Silanole nur in Mengen bis < 1 ppbw enthalten.

2. Verfahren nach Anspruch 1, **dadurch gekennzeichnet, dass** es sich bei dem Hexachlordisilan enthaltenden Gemisch um Prozessabgase, die bei der Abscheidung von polykristallinem Silizium erhalten werden, handelt.

3. Verfahren nach einem oder mehreren der Ansprüche 1 bis 2, **dadurch gekennzeichnet, dass** die Destillation unter Normaldruck oder einem minimalen Überdruck durchgeführt wird.

4. Verfahren nach einem oder mehreren der Ansprüche 1 bis 3, **dadurch gekennzeichnet, dass** Wasser in Mengen von maximal 5 ppbw anwesend ist.

5. Verfahren nach einem oder mehreren der Ansprüche 1 bis 4, **dadurch gekennzeichnet, dass** Wasser in Mengen von maximal 1 ppbw anwesend ist.

6. Verfahren nach einem oder mehreren der Ansprüche 1 bis 5, **dadurch gekennzeichnet, dass** kein Wasser anwesend ist.

## Claims

1. Process for preparing hexachlorodisilane by distilling a mixture comprising hexachlorodisilane, **characterized in that** water is present in the distillation in amounts of not more than 10 ppbw (parts per billion by weight) and the mixtures comprising hexachlorodisilane are those which may, as well as hexachlorodisilane, comprise tetrachlorosilane and possibly also traces of trichlorosilane, the chlorosilane mixtures containing silanols only in amounts up to < 1 ppbw, if any.

2. Process according to Claim 1, **characterized in that** the mixture comprising hexachlorodisilane is a process offgas obtained in the deposition of polycrystalline silicon.

3. Process according to one or more of Claims 1 to 2, **characterized in that** the distillation is performed under standard pressure or a minimal elevated pressure.

4. Process according to one or more of Claims 1 to 3, **characterized in that** water is present in amounts of not more than 5 ppbw.

5. Process according to one or more of Claims 1 to 4, **characterized in that** water is present in amounts of not more than 1 ppbw.

6. Process according to one or more of Claims 1 to 5, **characterized in that** no water is present.

## Revendications

1. Procédé de fabrication d'hexachlorodisilane par distillation d'un mélange contenant de l'hexachlorodisilane, **caractérisé en ce que** de l'eau est présente pendant la distillation en quantités d'au plus 10 ppbw (parties par milliard en poids = parts per billion by weight) et les mélanges contenant de l'hexachlorodisilane consistent en des mélanges qui peuvent contenir en plus de l'hexachlorodisilane du tétrachlorosilane et éventuellement également des traces de trichlorosilane, les mélanges de chlorosilane ne contenant pas de silanols ou ne contenant des silanols qu'en quantités < 1 ppbw.

2. Procédé selon la revendication 1, **caractérisé en ce que** le mélange contenant de l'hexachlorodisilane consiste en des gaz d'échappement de procédé, qui sont obtenus lors du dépôt de silicium polycristallin.

3. Procédé selon une ou plusieurs des revendications 1 à 2, **caractérisé en ce que** la distillation est réalisée sous pression normale ou à une surpression minimale.

4. Procédé selon une ou plusieurs des revendications 1 à 3, **caractérisé en ce que** de l'eau est présente en quantités d'au plus 5 ppbw.

5. Procédé selon une ou plusieurs des revendications 1 à 4, **caractérisé en ce que** de l'eau est présente en quantités d'au plus 1 ppbw.

6. Procédé selon une ou plusieurs des revendications 1 à 5, **caractérisé en ce qu'**aucune eau n'est présente.
